# EUROPEAN PATENT APPLICATION

(11) **EP 4 209 967 A1**
(43) Date of publication of application: **12.07.2023**
(21) Application number: 22150969.8
(22) Date of filing: 11.01.2022
(51) Int. Cl.: G06N 3/04, G06N 3/08, G06N 5/04, G06Q 10/08, G06F 40/44, G06F 40/56

(54) **IDENTIFYING A SIMILARITY OF AT LEAST ONE COMPONENT ENTRY**

(71) Applicant: Siemens Aktiengesellschaft, 80333 München (DE)
(72) Inventor: SUKHAREVA, Maria, 90429 Nürnberg (DE); SAHAL, Emre, 80937 München (DE)
(74) Representative: Siemens Patent Attorneys

(57) **Abstract**

Embodiments herein generally involve methods for identifying a similarity of at least one component entry within a dataset of a plurality of component entries related to electrical components. In one embodiment, a method is proposed, the method comprising the steps of generating a semantic description of at least one attribute data included in at least one component entry and determining, for at least one pair of component entries, a degree of similarity between semantic descriptions of the pair of component entries using at least one machine learning unit for determining the similarity. Generating the semantic description may specifically include a generation of a vector representation encoding semantic descriptions of the at least one component entry.

## Description

### TECHNICAL FIELD

The present embodiments relate to a computer implemented method for identifying a similarity at least one component entry within a dataset of a plurality of component entries related to electrical components.

### BACKGROUND

Electronic devices, computers, electronic assemblies, or electric devices in general are assembled from a number of component parts. For instance, a typical electric device has a housing that internally supports a motherboard coupled to components such as a central processing unit, random access memory, integrated circuits, transistors, capacitors, resistors etc. These components are generally referred to as electronic components.

Maintaining an inventory of electronic components presents a significant challenge to a manufacturer. Generally, the manufacturer will track electronic components with an inventory management system to ensure an adequate and timely supply.

Inventory management systems typically provide indications to a technical staff when a particular electrical component reaches a low inventory level so that the staff may replenish the inventory. The technical staff usually orders electronic components from different providers or distributors. Different providers, however, use different identifiers for same or similar electrical components. Even worse, different providers or distributors may use differing expressions pertaining to attributes - e.g., resistance, capacitance, temperature range - of electrical components. For these reasons alone, a high number of component entries unintentionally increases the complexity within the inventory management system. In order to reduce this complexity,

Different electrical components from different providers or distributors sum up to a large data set where each component needs to be compared with all the other components entries of the dataset. Still further, this comparison is highly complex since an evaluation of the electrical components requires domain knowledge of experts in the field of the electrical components.

These intricacies are even aggravated in that component entries are redundantly assigned to an identical electrical component, or at least to an equivalent electrical component. These identical or at least equivalent electrical components could be actually regarded as identical in the context of the manufacturer's requirements, so that a single component entry would be sufficient for several of these redundant electrical components.

A similarity between component entries is to be decided by evaluating their respective attributes which may range from a small number up to hundreds, depending on the electrical component, but also depending on the diligence for creating the component entry. In other words, even the structure of component entries may vary.

Due to the structural diversity and the overwhelming variation in the multiplicity of component entries, manual or non-automated extraction of component entries from a dataset and determination of similarities between these component entries are doomed to fail from the start.

Accordingly, there is a need in the art for an automated method for identifying a similarity of at least one component entry within a dataset of a plurality of component entries related to electrical components. Retrieving pairs of suspectedly similar component entries would significantly reduce a manual load for comparison.

There is a need in the art for automated means for capturing similar attributes of component entries and for explaining or justifying a similarity classification. Providing an explanation would decrease the number of attributes needed to be compared and would increase transparency rendering results mor trustfully for an expert's evaluation.

Further on, there is a need in the art for identifying and deduplicating redundant or similar component entries in order to reduce redundancy and associated complexity of the data set.

### SUMMARY

Embodiments herein generally involve methods for identifying a similarity of at least one component entry within a dataset of a plurality of component entries related to electrical components.

In one embodiment, a method is proposed, the method comprising the steps of:
- generating a semantic description of at least one attribute data included in at least one component entry. and;
- determining, for at least one pair of component entries, a degree of similarity between semantic descriptions of the pair of component entries using at least one machine learning unit for determining the similarity.

Generating the semantic description may specifically include a generation of a vector representation encoding semantic descriptions of the at least one component entry.

In another embodiment, a machine-learning system for identifying a similarity of at least one component entry within a dataset of a plurality of component entries related to electrical components is proposed, the system comprising:
- a Siamese Neural Network having fully-connected hidden layers and being trained with both the numeric and string attributes of at least two classified datasets;
- a long-short term memory network (LSTM) decoder for generating a textual summary in natural language for substantiating the similarity; and;
- an attention network for combining encoded data for similarity and alignment of inputs with previous hidden states.

The embodiments generally aim for using neural networks for determining similarity and learn the similarity from the data in a supervised setting. Moreover, the embodiments aim to provide a transparent model with explanations of their similarity.

A supervised approach is able to mitigate problems with the current baseline model. Thereby, pairs of similar and non-similar parts are selected from the data. Siamese networks with fully-connected hidden layers are used to learn the aspects of the data which contribute to the similarity. These networks show promising results. When trained with both numeric and string attributes of the component entries the Siamese Neural Networks exhibit near perfect accuracy and recall. Accurate and efficient similarity detection between electrical component parts is made possible.

To handle transparency, a text summary may be generated by using LSTM networks (Long short-term memory) and encoder-decoder structure, optionally including an attention function. Comments from engineers regarding similarity as well as their ranking of similarity may be used to generate annotations for unseen data that predicted the similarity grade and listed the differences of the parts.

This text allowed a better explanation for the comparison of the parts and allowed easier and better sanity checks for the models increasing trust in the models themselves. The text-generation model which incorporated attention and the combined data displayed promising results except similarity grade prediction. The model generated the comments with very high information accuracy and structure while retaining the accuracy from the similarity detection.

### DESCRIPTION OF THE DRAWING

The objects as well as further advantages of the present invention will become more apparent and readily appreciated from the following description of the preferred embodiments, taken in conjunction with the accompanying drawing accompanying drawing of which:
- FIG. 1: shows a schematic architectural diagram of a machine learning unit according to a first embodiment;
- FIG. 2: shows a schematic architectural diagram of a machine learning unit according to a second embodiment; and;
- FIG. 3: shows a schematic architectural diagram of a machine learning unit according to a third embodiment

### DETAILED DESCRIPTION

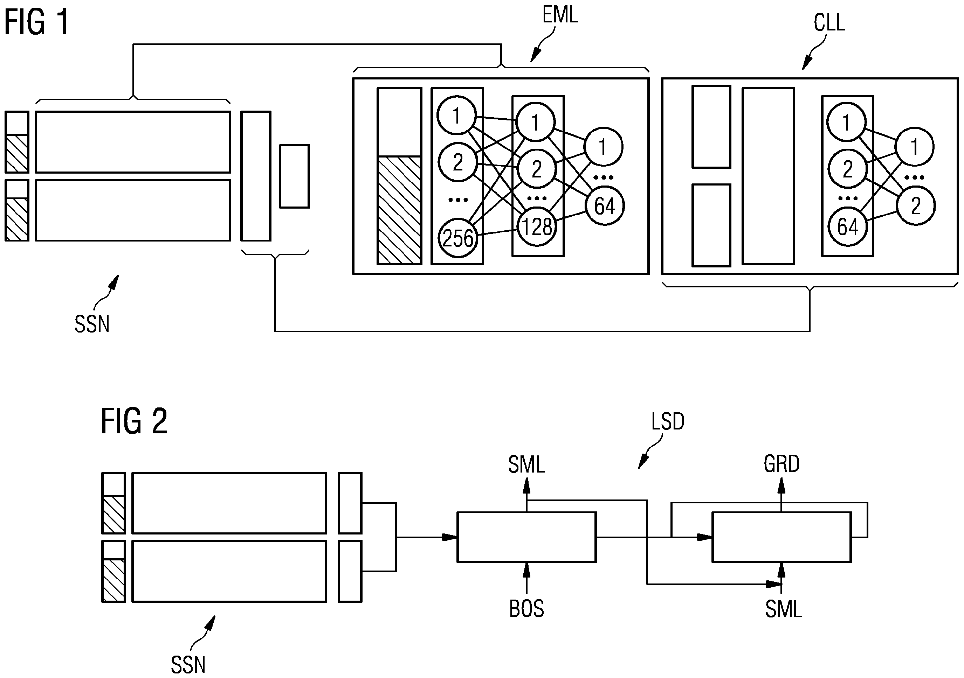

FIG. 1 is a schematic architectural diagram of machine learning unit. The machine learning unit may include a Similarity Siamese Neural Network SSN with an Embedding Layer EML and a Classification Network CLL. In the drawing, a Siamese Encoder is symbolized by two elongated bars arranged parallel to one another.

In general, a Siamese Neural Network is a type of artificial neural network architecture which may be used for similarity detection. A Siamese Neural Network is a dual network with shared weights. The duality ensures that the compared inputs are both mapped to the same output space. If these inputs are similar, they are mapped closely in the new space. If these inputs are dissimilar, they are mapped further away. The distance between the inputs is then calculated to decide whether these inputs are similar or not.

In general, an encoder-decoder architecture uses a neural network to encode the data into a latent representation. This latent representation is then used by another neural network, the decoder, in order to generate a desired sequential output. In Fig. 1, the Embedding Layer EML essentially conforms with an encoder and the Classification Network CLL essentially conforms with a decoder of an encoder-decoder architecture.

The Siamese Neural Network SSN may be a feed-forward network comprising three fully connected layers as shown in the Embedding Layer EML of the drawing. These layers may comprise 256, 128, and 64 neurons, respectively. The classification network CLL may consist of an absolute distance layer and a fully connected dense layer with an input size of 64 and an output size of two. The number of two outputs is a result of two possible classes: similar or non-similar.

The Siamese Neural Network SSN may be used to learn a grade of similarity - or simply: to learn a similarity - from attributes of at least one component entry. For this approach, pairs of similar component entries and the same number of randomly selected pairs of non-similar component entries may be fed to the Siamese Neural Network SSN. The Siamese Neural Network SSN may be used to encode the attributes of the component entries to be compared.

For the purpose of training the similarity in supervised setting, at least one dataset may be provided. A first dataset may exclusively provide numeric attributes while a second dataset may be provided for combined numeric and string inputs. Training the similarity determined by the machine learning unit for the numeric dataset only numeric attributes are selected. For the combined dataset, string values are embedded using an additional word embedding model such as FastText and concatenated with the numeric values. After that, similar and non-similar parts to form a dataset are selected.

In a first step of the actual training, one or more component vectors are passed through the Siamese networks SSN individually. This act embeds the original component vectors to the same lower dimensional space. In a second step of the actual training, an absolute distance between these embedding vectors is calculated. A resulting distance vector is passed to the second classification layer which outputs the possibilities for the two classes. For training the whole model, the Siamese Neural Network SSN and the classification network CLL are trained end-to-end.

Turning now to FIG. 2 in which a schematic architectural diagram of a machine learning unit according to a second embodiment is shown. The machine model as shown in FIG. 2 differs from the embodiment shown in FIG. 1 by an additional text generation unit (right part of FIG 2) on top of the previously described similarity detection unit, the Siamese Neural Network SSN. In this machine learning unit according to FIG 2, an encoder-decoder architecture is used to encode data of the given parts and generate the given comments. The encoder is formed by the previously described Siamese Neural Network SSN. The additional text generation is aiming to generate explanations of similarity in a human-readable or natural language description of the differences learned from the comments which have been manually annotated by regarding the similarity.

The decoder is a LSTM decoder LSD which may feature a hidden size of 128 and an input size equaling a length of a word embedding vector. The LSTM decoder LSD may include an embedding layer with an input size of the vocabulary length, an output size of 128. The decoder may include a fully connected layer with an input size of 128 and an output size equaling vocabulary length with softmax activation. Softmax may be used to determine probabilities of the next words.

In a method according to embodiment disclosed above, a similarity detection is provided along with a text generation, wherein the given comments are preprocessed, and a new dataset is created.

The act of providing at least one dataset is similar to providing a dataset according to the embodiments described above.

In an additional preprocessing step, following the act of providing a dataset, similarity grades and comments are combined to unify all information which is to be included into one sentence. Consequently, dissimilar pairs are randomly sampled. Dissimilar means, that a respective pair has neither a degree of similarity nor an expert comment. For these pairs a constant test string may be assigned: »These are not similar«. A plurality of these sentences are tokenized. Afterwards, unique words and any punctuation are extracted to from a vocabulary. This vocabulary may be used for creating two dictionaries.

A first dictionary, index2word, may be used to convert an arbitrary assigned integer to a specific word. This first dictionary may be used for converting the softmax results into the word. A second dictionary, word2embedding, may map words to their embeddings. This embedding could be the randomly assigned integers given in the previous dictionary or the FastText embeddings of the word depending on the method.

Finally, tags for structuring the machine-understanding may be added to the vocabulary:
- An empty tag <EMP> may be used for padding the sentences to a fix uniform length. This tag may be converted to zeroes when the sentences are encoded.
- A beginning of sentence tag <BOS> signifying the beginning of the source sentences. This tag may be used during inference as the initial input to the decoder sequence for generating the first word.
- An end of sentence tag <EOS> may be inserted at the end of target sentences in order to indicate the sentence being completed. This tag is used to stop the decoder when this token was generated.

Next, two sets of sentences are generated, the source sentence and the target sentence. The source sentence is the sequence used as input for each time step to the LSTM decoder LSD. The target sentence is the ground truth for the words outputted by LSTM decoder LSD at that time step. Accordingly, the beginning of sentence tag <BOS> is added to the beginning of the source sentence and the end of sentence tag <EOS> is added to the end of the target sentence. Both of these sentences are than padded to a maximum sentence length with the empty tag. An example source and target sentence pair after the comments have been preprocessed is shown below:
<BOS> Similarity Type : B . Comment : Difference in : Leakage Current , Max . DF , Product Height , Ripple Current , Temp . <EMP> <EMP> <EMP> <EMP>
Similarity Type : B . Comment : Difference in : Leakage Current , Max . DF , Product Height , Ripple Current , Temp . <EOS> <EMP> <EMP> <EMP> <EMP>

Having been padded, the sentences are converted to their numeric values using the dictionary word2embedding. This final step concludes the act of preprocessing the sentences. At this point, the dataset contains the component vectors for the electrical components to be compared. The dataset contains the source sentence which was the padded comment sentence starting with a beginning of a sentence tag. This source sentence has been input to the decoder. The padded target sentence ending with an end of sentence tag and padding tags is generated by the decoder. This target sentence is determined to be the ground truth for the outputs.

In the example source and target sentence pair as shown above, the first input to the decoder would be the beginning of sentence tag and the ground truth would be the word »Similarity«. In the next time step the input would be the word »Similarity« and the desired output would be »Type«.

Subsequently, an act of training the similarity may be executed. For the model, the component vectors are fed into and passed through the Siamese Neural Network SSN. The outputs of the Siamese Neural Network SSN are concatenated, resulting in an encoded vector of the initial data of the components. This vector is passed to the LSTM decoder LSD and input as a hidden state and a cell state. This approach uses the inputs learned via the Siamese Neural Network SSN. The input is selected as a beginning of sentence tag. This approach was preferred over other known approaches in the art which do not use a beginning of sentence tag but randomly initialize the hidden states of the decoder and pass the encoder output as the first input to the decoder.

If the word embedding is 1-of-V, an embedding layer is used to embed the word to a 128-dimensional vector. If the words are already embedded with FastText, this step is skipped and the FastText embeddings are used instead of this layer. This embedding is passed to the LSTM decoder LSD as the input. The LSTM decoder LSD uses the initial cell and hidden states from the encoder and the input embedding from the source input sentence and generates an output vector.

The softmax layer is then used to convert this output vector into possibilities related to the words in the vocabulary. The index with the highest possibility is selected as the prediction. The new cell states and hidden states are then passed from the first cell of the LSTM decoder LSD to the other cell with the new input from the source embeddings. A new word is generated until the length of the sequence is reached.

Since the data points are smaller than most other natural language processing tasks, teacher forcing may be used in the training of the model. This means that during training of the model, the inputs to the LSTM decoder LSD are the embeddings of the ground truth and not the embeddings of the previously predicted words. This approach allows the model to converge faster but, at the same time, hinders the model from learning better text generation. That is because in inference the model does not dispose of the ground truths, hence needing to predict based on previously generated words. Using of teacher forcing may cause Exposure bias, where a wrongfully generated word in the beginning may affect the whole sentence. In this problem, however, the words generated are very loosely coupled with each other and tightly with the encoded part vectors. Accordingly, this problem can be neglected.

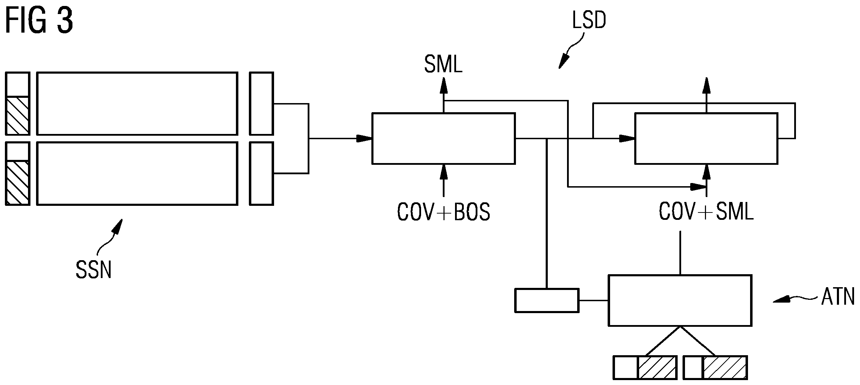

Turning now to FIG. 3 in which a schematic architectural diagram of a machine learning unit according to a third embodiment is shown. The machine model as shown in FIG. 3 differs from the embodiment shown in FIG. 2 by an additional attention network ATN (lower part of FIG 3) on top of the text generation unit as shown in FIG. 2.

The attention network ATN is added to further improve the text generation. The attention network ATN may be tested with only one complete numeric and string data. With the attention network ATN both, the encoded data for similarity and the alignment of the inputs with the previous hidden states are combined to further improve the generation of the similarity comments.

In order to form the attention network ATN, two fully connected layers are used to embed the numeric and string values. For numeric attributes, a neural network for tabular data may advantageously be used, particularly a SAINT model for tabular data via row attention and contrastive pre-training or tabTransformer model. Each 1-dimensional vector is embedded to a higher d-dimensional vector with a fully connected layer. In one embodiment, d was selected to a value of 128.

For string attributes, all string values of the string attributes are embedded together by using the opposite fully connected layer of the dual network of the Siamese Neural Network SSN. After the embeddings are created per numeric attribute and including all string attributes, the embeddings are compared with the hidden state of the previous LSTM cell. For the first LSTM cell the previous hidden cell is the embedding value from the Siamese Neural Network SSN. The comparison is computed by first passing a previous hidden state through a hidden layer W1 and each embedded attribute vector with W2. After this, the encoding of the hidden state is added to the encoding of the attribute vectors. These summed vectors are passed through a final layer V with tanh activation in order to generate a single number or score per attribute. These scores signify the alignment of each attribute with the previous hidden state. This score vector is then passed through a softmax activation. Finally, the context vector is created by multiplying each feature vector with the respective scores and adding the multiplied feature vectors together.

An application of an attention model is motivated as follows: The difference in characteristics specified in the generated comment depend more on certain inputs than on other inputs.

The difference in »Product Temp« predominantly depends, for example, on temperature-related attributes but not on size-related or electricity-related attributes. This relation was solved in machine translation with attention models where some words in the input sentence were more effective in determining the next word then the others. So, on top of the previous model described in FIG. 2, an attention network is added to further improve the text generation. The attention model may be tested with the complete numeric and string data. Integrating the attention model both, the encoded data for similarity and the alignment of the inputs with the previous hidden states, are combined to further improve the generation of the similarity comments.

A training of the attention model is mostly the same with the previous model described in FIG. 2. The difference was that the inputs of the decoder LSTM were concatenated with context vector generated from the inputs and the hidden state of the previous network. In this case, the input size for the LSTM is given as the embedding vector size and the context vector size. For this model, the context vector may have a size of 128 and the FastText embedding size for the words may have a size of 300. Accordingly, the LSTM has an input size of 428.

In order to grant for a reasonable evaluation and in accordance with the training of the previous model described in FIG. 2 hyper parameters of the present model described in FIG. 3 are kept the same and a convergence of the model is ensured.

Having disclosed components and concepts of a machine learning unit as applied by the present embodiments, the disclosure now turns to the data which may be fed into inputs of one of the machine learning units.

A database comprising one or more datasets for a plurality of component entries related to electrical components may be stored in one or more column-based data storage formats. Such data formats may be hosted by a distributed data processing system, e.g., Apache Hadoop. Among actual technical data, e.g., attributes of the component entries, the database may additionally include data such as supplementary data and a manually computed »ground truth« for the electrical components. Said ground truth may include a plurality of component entries known to be similar or known to be dissimilar. This knowledge about similarity of component entries included in the ground truth may be provided by visual inspection of the component entries as opposed to information provided by inference according to one of the embodiments disclosed herein.

After a plurality of component entries is extracted from the database, the component entries may be ordered into one of two datasets. Both datasets may contain three distinct data frames:
- A data frame entitled »data« including the actual technical data stored for each electrical component.
- An optional data frame entitled »importance« including metadata about the attributes stored in the data frame »data« and signifying the importance level of these attributes. Importance of attributes may be ranked in a number of categories, e.g. »High«, »Medium« or »Low«.
- A data frame entitled »mapping« including comments on similar electrical components which have been manually annotated by experts or engineers. The comments may include simple annotations describing differences between similar parts in the event that these parts have been found to be similar by the expert. The comments may also include aspects in which these similar electrical components differ.

Accordingly, a data frame may not only comprise pairs of similar parts, but, additionally a grade of their similarity, and comments regarding their similarity.

According to an embodiment, a component entry may be transformed into a component vector and compared with at least one other component entry likewise transformed into a component vector. A component vector may be selected from the dataset and compared with some or all remaining component vectors of the dataset.

In the following three possible embodiments for an inclusion of attributes within a component vector to be generated are described.

According to a first embodiment, numeric attributes are considered as the most important attributes for similarity detection while other attributes (e.g., string attributes) are not considered as significantly contributing to the similarity. Accordingly, only the numeric values are used for creating the component vector, while string attributes or other textual data was discarded. The assumption behind this embodiment is that the comments mostly highlight the differences for numeric attributes.

According to a second embodiment, both, string attributes and numeric attributes, are included in a component vector. One main issue with using the string attributes is that these string attributes, considering misspelling errors, are too varying to be transferred into categories. Merely encoding all string attributes would result in an oversized multi-dimensional vector. Since computing a distance between oversized multi-dimensional component vectors would be infeasible and time-consuming, an autoencoder may be trained or used in order to reduce the dimensionality of the component vectors. The component vectors are split into train validation and test and the auto encoder may be trained for 100 epochs. After training, the autoencoder may be used for all data to create component vectors with e.g., 256 dimensions.

According to a third embodiment, both, string attributes and numeric attributes, are again included in a component vector. In this third embodiment, however, an additional word embedding model such as FastText is used for encoding string variables into a multidimensional (e.g.,300-dimensional) vector and including the 300-dimensional vector into the component vector. The values are first joined to form a long string, allowing spelling changes and misspelled words in the dataset to be recovered. This embodiment is suitable for non-existent values for attributes since a string may be formed no matter which values are missing from the string attributes. A usage of the FastText model may provide flexibility in the length and the amount of string attributes. Eventually, the numeric vectors and the FastText vector are concatenated to form the final component vector.

Having disclosed some basic system components and concepts, the disclosure now returns to some exemplary method embodiments for identifying a similarity of at least one component entry within a dataset of a plurality of component entries related to electrical components.

A preferred method comprises the step of generating a semantic description of at least one attribute data included in at least one component entry and determining, for at least one pair of component entries, a degree of similarity between semantic descriptions of the pair of component entries using at least one machine learning unit for determining the similarity.

One or more pairs of similar and non-similar component entries are selected from the data set. Siamese networks with fully-connected hidden layers are used to learn the aspects of the data which contribute to the similarity. When trained with both, numeric and string attributes of the component entries, the Siamese networks show near perfect accuracy and recall granting for accurate and efficient similarity detection between electrical components.

In order to ensure transparency, a text summary may be generated by using an LSTM network LSD and an encoder-decoder structure with an attention function. The comments from engineers regarding similarity as well as their ranking of similarity may be used for generating machine-generated annotations, predicting or determining the similarity grade and for listing differences of different component entries.

These machine-generated annotations allow for a better explanation and easier sanity checks for the models while increasing trust in the models themselves.

The text-generation model incorporating an attention function shows promising results in the similarity grade determination. This model is capable of generating machine-generated annotations or comments with high information accuracy and structure while retaining the accuracy from the similarity detection.

It is to be understood that the elements and features recited in the appended claims may be combined in different ways to produce new claims that likewise fall within the scope of the present invention. Thus, whereas the dependent claims appended below depend from only a single independent or dependent claim, it is to be understood that these dependent claims can, alternatively, be made to depend in the alternative from any preceding or following claim, whether independent or dependent, and that such new combinations are to be understood as forming a part of the present specification.

While the present invention has been described above by reference to various embodiments, it should be understood that many changes and modifications can be made to the described embodiments. It is therefore intended that the foregoing description be regarded as illustrative rather than limiting, and that it be understood that all equivalents and/or combinations of embodiments are intended to be included in this description.

## Claims

1. A computer implemented method for identifying a similarity of at least one component entry within a dataset of a plurality of component entries related to electrical components, the method comprising the steps of:
- generating a semantic description of at least one attribute data included in at least one component entry; and;
- determining, for at least one pair of component entries, a degree of similarity between semantic descriptions of the pair of component entries using at least one machine learning unit for determining the similarity.

2. The method according to claim 1, wherein the at least one machine learning unit is a Siamese Neural Network having fully-connected hidden layers.

3. The method according to one of the aforementioned claims, wherein generating a semantic description includes generating a vector representation, the vector representation encoding semantic descriptions of the at least one component entry.

4. The method according to one of the aforementioned claims, wherein numeric attributes represented by a numeric data type and/or string attributes represented by a string data type are processed to generate a semantic description of the least one attribute data.

5. The method according to one of the aforementioned claims, wherein at least one string attribute is combined with at least one string attribute to form the semantic description of the least one attribute data.

6. The method according to one of the aforementioned claims, wherein at least one string attribute is embedded using a word embedding model concatenated with at least one numeric attribute to form the semantic description of the least one attribute data.

7. The method according to one of the aforementioned claims, including the step of:
- training the machine learning unit using at least two classified datasets.

8. The method according to claim 7, wherein the training is an end-to-end training.

9. The method according to claim 7, wherein the training is made in a supervised setting.

10. The method according to one of the aforementioned claims, including the step of:
- generating a textual summary in natural language for substantiating the similarity.

11. The method according to claim 10, wherein the determined degree of similarity and annotations provided in connection with component entries are combined to create the textual summary.

12. The method according to one of claims 10 or 11, the textual summary including at least one tag for structuring the textual summary for the machine learning unit.

13. The method according to one of the aforementioned claims, the machine learning unit including at least one long-short term memory network (LSTM) decoder.

14. The method according to one of the aforementioned claims, the machine learning unit including at least one attention function.

15. A machine-learning system for identifying a similarity of at least one component entry within a dataset of a plurality of component entries related to electrical components the system comprising:
- a Siamese Neural Network having fully-connected hidden layers and being trained with both the numeric and string attributes of at least two classified datasets;
- a long-short term memory network (LSTM) decoder for generating a textual summary in natural language for substantiating the similarity; and;
- an attention network for combining encoded data for similarity and alignment of inputs with previous hidden states.
